Europäisches Patentamt

European Patent Office

Office européen des brevets

(19)

(11) Publication number: **0 028 249**
**B1**

# EUROPEAN PATENT SPECIFICATION

(12)

(45) Date of publication of patent specification: **04.04.84**

(21) Application number: **80901088.7**

(22) Date of filing: **10.04.80**

(86) International application number:
**PCT/US80/00407**

(87) International publication number:
**WO 80/02413 13.11.80 Gazette 80/26**

(51) Int. Cl.³: **B 65 G 25/00,**
**B 65 G 65/00, B 65 G 1/00**

(54) APPARATUS FOR THROTTLING A DRY PULVERIZED SOLID MATERIAL PUMP.

(30) Priority: **07.05.79 US 36578**

(43) Date of publication of application:
**13.05.81 Bulletin 81/19**

(45) Publication of the grant of the patent:
**04.04.84 Bulletin 84/14**

(84) Designated Contracting States:
**CH DE FR GB LI NL**

(56) References cited:
**WO - A - 80/02279**
**US - A - 1 289 779**
**US - A - 3 103 311**
**US - A - 3 182 825**
**US - A - 4 034 870**
**US - A - 4 120 410**

(73) Proprietor: **LOCKHEED MISSILES & SPACE COMPANY, INC.**
**1111 Lockheed Way**
**Sunnyvale, CA 94086 (US)**

(72) Inventor: **BONIN, John Henry**
**1257 Sargent Drive**
**Sunnyvale, CA 94087 (US)**
Inventor: **MEYER, John William**
**3124 David Avenue**
**Palo Alto, CA 94303 (US)**
Inventor: **DANIEL, Arnold Dewey, Jr.**
**P.O. Box 112**
**Pleasanton, CA 94566 (US)**

(74) Representative: **Boon, Graham Anthony et al,**
**Elkington and Fife High Holborn House 52/54**
**High Holborn**
**London, WC1V 6SH (GB)**

Courier Press, Leamington Spa, England.

Apparatus for throttling a dry pulverized solid material pump

This invention relates to a kinetic extruder for feeding pulverized coal from an atmospheric pressure hopper to an elevated pressure reactor vessel for gasification of the coal. It relates more particularly to a kinetic extruder capable of controlling and adjusting the amount of feedstock by means of a rotor having throttleable control orifices.

As noted in co-pending Europeant patent specifications 0027458 and 0027459 there are a number of industrial processes which require the feeding of solid material from a lower atmospheric pressure environment to the elevated pressure environment within the working vessel. As is noted in these specifications, one such process is coal gasification. Coal gasification processes generate combustible gases by pyrolyzing pulverized or powdered coal at elevated temperatures.

In the prior art arrangement, a liquid-solid mixture is pumped into the pressure vessel. This prior art arrangement is referred to as the slurry feed method and suffers the disadvantage that the liquid has to be separated from the solid prior to it being utilized in the process. Another arrangement is to load the solid material into a pressurized hopper type device, pressurize the hopper with inert gas, and then dump the material, along with the inert gas, into the pressure vessel. This method is commonly referred to as the Lockhopper feed method. It does allow for varying the amount of material to be fed to the process.

The above mentioned specification 0027458 discloses a method and apparatus that overcomes the shortcomings of other prior art devices. This is achieved by utilizing a rotor enclosed within a pressurized container. The material is fed to the rotor from an atmospheric feed hopper through a stationary feed pipe and then is forced from the rotor into the high pressure vessel.

Although the kinetic extruder shown in that patent application solves many problems that exist in the prior art devices, it suffers a disadvantage of not being able to vary the feed rate of the material in an efficient manner. The above mentioned specification 0027459 allows for a degree of flexibility in the feed rate of the material, but still is not as flexible in this area as desired.

US—A—3182825 discloses an apparatus for continuous feeding of relatively fine particulate material into a high pressure container. The disclosed apparatus comprises a rotor having a central hub and a plurality of sprues providing a passageway through which the particulate material is passed. Each of the sprues extends radially outwardly from an inner periphery of the rotor to terminate adjacent to a control nozzle at the outer periphery of the rotor. It will be noted that the outlets from the sprues in US—A—3182825 are controlled by valves which operate against spring pressure.

The present invention provides an apparatus for the continuous feeding of relatively fine particulate material into a high pressure container, comprising: a rotor having a central hub and a plurality of sprues providing a passageway through which the particulate material is passed, each of said sprues extending radially outward from an inner periphery of said rotor to terminate adjacent to a control nozzle at the outer periphery of the rotor, characterized by variable gas pressure means connected to said control nozzles at a location radially outward from said sprue for varying the gas pressure within said control nozzles to thereby adjust the flow rate of the particulate material.

In the accompanying drawings:

Figure 1 is a vertical sectional view, with portions shown diagrammatically, of the variable material feeder embodying the pressure control system of this invention;

Figure 2 is an enlarged sectional view of the prior art control orifice;

Figure 3 is an enlarged sectional view of the throttleable control orifice of the present invention; and

Figure 4 is a plot of the throttling ratio as a function of the control pressure at the control orifice.

The present invention shows a means to directly influence the pressure difference across the control orifice and thereby control the discharge rate of the orifice. This in turn changes the flow rate through the sprues and thereby the flow rate through the feeder.

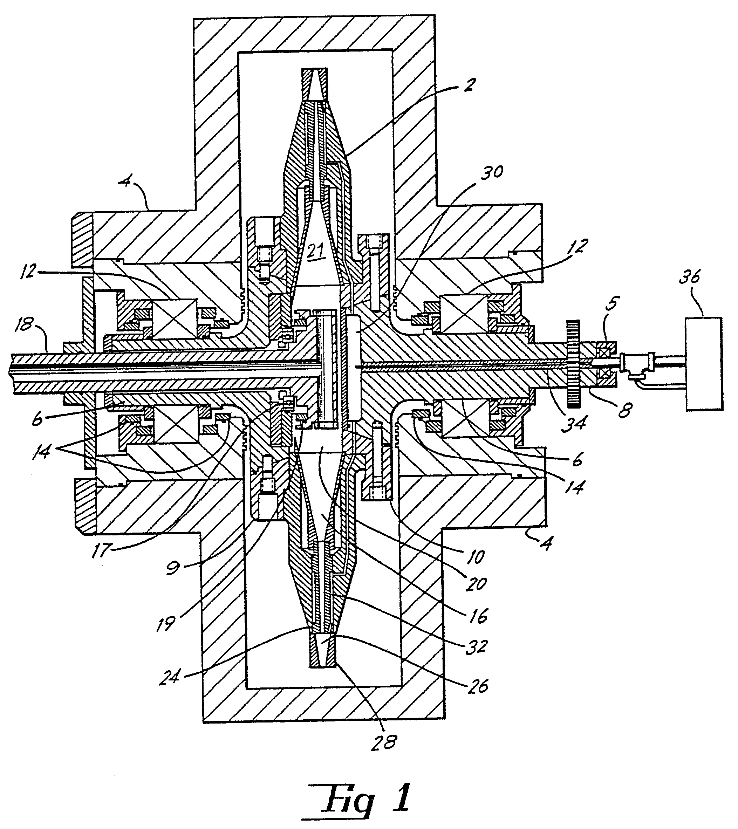

Referring now to Figure 1, there is shown, a rotor 2 that is rotatably mounted in the horizontal axis within the pressure vessel 4. It is understood that, although the rotor is shown and described as being mounted by a horizontal axis, it could be mounted on a vertical or other axis as well. The rotor includes hub portions 6 and mounting clamps 9 and 10. The rotor is rotatably supported by bearings 12. Seals 14 are provided on either side of the bearings to seal the lubricant and to prevent dust from damaging the bearings.

Extending from portion 6 of the rotor 2 is a drive shaft 8. A motor (not shown) is attached to the drive shaft by any well known means to drive the rotor at the desired speed. A stationary T-shaped feed tube 18 is mounted coaxially within the rotor and co-operates with spin-up zone 20 to feed pulverized coal to the plurality of sprues 16.

The feed tube 18 is positioned within the rotor 2 by a bearing 17 and the bearing 17 is protected by the seal 19.

The sprues 16, as shown, may be made in two sections. First section 22, viewed sectionally, has a transition from a rectangular cross-sectional shape to a circular cross-sectional shape, provides a large reduction in area. The second section 24 defines an aperture which is circular in cross-sectional area and which has a relatively small area reduction in the radial direction. The coal egresses from the second section 24 through a plenum 26 into control orifices 28.

The sprues and control orifices are designed to be easily replaceable.

The rotor hub portion defines a central gas plenum 30. A gas feed line 33 connects the central gas plenum 30 to a gas receiving space 32 adjacent to the sprue and then to the control orifice plenums 26. The central gas plenum 30 is connected through gas feed line 34 through a rotating seal 5 to a plenum pressure regulator and control system, shown generally as 36.

In operation, coal is fed to the rotor through T-shape feed tube 18 and into the spin-up zone 20. Coal is then fed into first sprue section from the spin-up zone. Centrifugal force feeds the coal through the sprue and through the second sprue section and out to the control orifice into pressure vessel 4.

During this operation, the velocity of the solid material in the sprues should be properly selected to avoid gas leakage from the high pressure region. If the material velocity is too slow, there will be excess gas leakage into the spin-up zone, making it difficult to maintain flow through the T-shape feed tube. If the material velocity is too fast, the gas pressure gradient in the sprue is raised to a high value, choking the sprue. This choking can be overcome by requiring a high rotor speed, which, in turn, will increase the centrifugal force to keep the material flowing, or by changing the pressure gradient by means of gas injection.

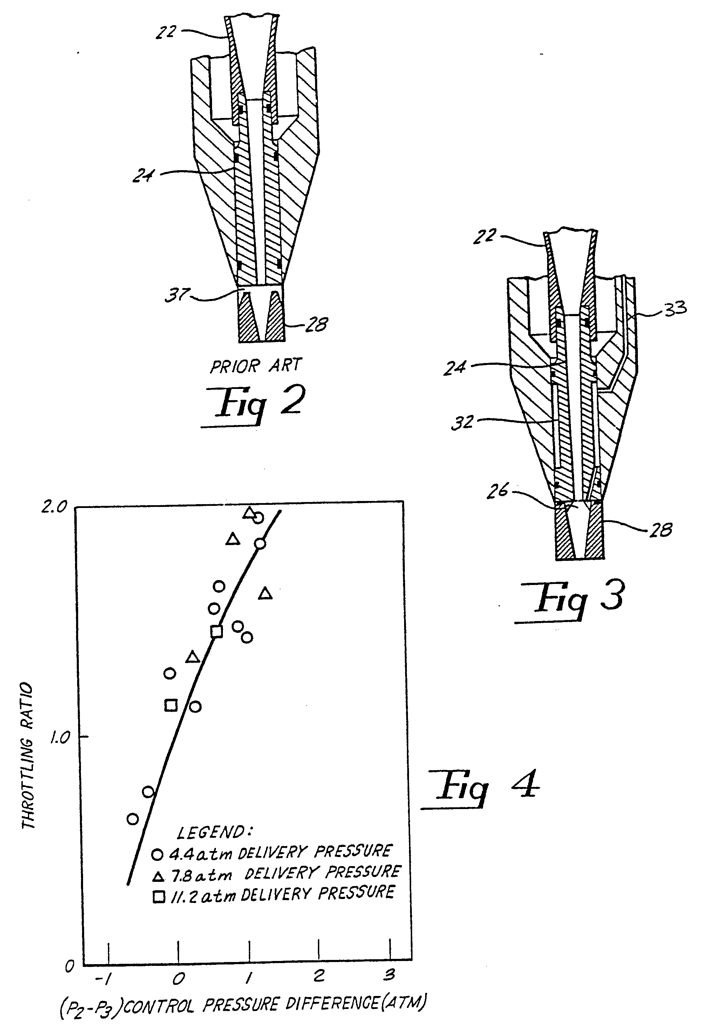

As described in the above mentioned European patent specification 0027458, the coal flow through the kinetic extruder sprues is stabilized by an isobaric control orifice which fixes the solids throughput independent of the delivery pressure. This control orifice configuration is shown in Figure 2. It should be noted that due to the presence of the pressure equalization ports 37, the pressure difference across this control orifice is zero. A gas pressure gradient exists only in the sprue portion of the flow channel. The solids flow rate through the control orifice is a function only of the outlet diameter and the local centrifugal force level, as given by the equation:

$$\dot{m} = Cd^{5/2}G^{1/2}$$

where
  d = hole diameter

$$G = \frac{rw^2}{g} \ \text{(G-force)}$$

  w = rotational rotor speed
  r = rotor radius
  C = empirical constant ($C = 0.32$ lbs/sec/in$^{5/2}$ (0.14 Kg/sec/cm$^{5/2}$) for conical orifice shapes)

In the new throttleable control orifice configuration of the present invention, shown in Figure 3, there are no pressure equalization ports and gas is supplied to the upper portion of the control orifice hopper by means of a plenum in the rotor. This plenum is in turn fed gas from an external supply. The gas pressure in the control orifice hopper may thus be controlled independently of the delivery pressure. The control orifice throughput is then given by

$$m = Cd^{5/2} \left( \frac{rw^2 - \dfrac{1}{\rho} \left( \dfrac{dp}{dr} \right)_0}{g} \right)^{1/2}$$

where

$$\left( \frac{dp}{dr} \right)_0 = \text{gas pressure gradient near the}$$
outlet of the control orifice.

The magnitude and sign of

$$\left( \frac{dp}{dr} \right)_0$$

is controllable by the overall pressure difference across the control orifice. The pressure gradient adds to the body force and $\dot{m}$ will be higher than the isobaric orifice value, if $P_2 > P_3$, where $P_2$ is the gas pressure within the control orifice and $P_3$ is the delivery pressure. Similarly if

$$P_2 < P_3 \cdot \left( \frac{dp}{dr} \right)_0$$

subtracts from the G-force and the solids flow rate will be reduced.

Due to the convergent shape of the control orifice, in comparison to the sprue, relatively significant outlet pressure gradients can be induced with quite modest control orifice pressure differences (e.g., 10—50 psi or 0.7—3.4 atm). The effective delivery pressure for the sprue channel is therefore not changed significantly in throttling the control orifices.

Test data for a kinetic extruder rotor equipped with this throttling system is presented in Figure 4. There is plotted the throttling ratio as a function of the control orifice pressure difference ($P_2 - P_3$). Here the throttling ratio is defined as the rotor solids throughput divided by the throughput that is achieved when the control orifice is isobaric ($P_2 = P_3$). The feedstock was a 70% passing 200 mesh coal grind. The rotor speed was approximately 3000 RPM and was not varied significantly in the tests.

The Figure 4 data clearly demonstrates the effectiveness of the throttling system. An overall range of 3:1 in feed rate was achieved over a control pressure difference range of −10 to +20 psi or −.7 to 1.4 atm. Furthermore the data verified that the throttling effect is sensitive only to the control orifice pressure difference and not sensitive to the absolute value of the delivery pressure.

## Claims

1. An apparatus for the continuous feeding of relatively fine particulate material into a high pressure container (4), comprising: a rotor (2) having a central hub and a plurality of sprues (16) providing a passageway through which the particulate material is passed, each of said sprues extending radially outward from an inner periphery of said rotor to terminate adjacent to a control orifice (28) at the outer periphery of the rotor, characterized by variable gas pressure means (30, 32, 34, 36) connected to said control orifices (28) at a location radially outward from said sprue for varying the gas pressure within said control orifices to thereby adjust the flow rate of the particulate material.

2. An apparatus according to claim 1, wherein said variable gas pressure means includes a gas receiving space (32) adjacent to said sprue and connected to the control orifice.

3. An apparatus according to claim 2, wherein said variable gas pressure means includes a central gas plenum (30) defined by the hub of said rotor and conduit means (33) connecting said central gas plenum to said gas receiving space (32).

4. An apparatus according to claim 3, wherein said variable gas pressure means includes a pressure regulator and control system (36).

## Revendications

1. Appareil pour amener en continu de relativement fines particules de matière dans une enceinte à haute pression (4), comprenant un rotor (26) ayant un moyeu central et un certain nombre d'entonnoirs (16) fournissant un passage traversé par lesdites particules de matière, chacun de ces entonnoirs s'étendant radialement vers l'extérieur a partir d'une périphérie intérieure dudit rotor, pour se terminer au voisinage d'un orifice de distribution (28) situé à la périphérie extérieure dudit rotor, caractérisé en ce qu'il comporte un moyen d'amenée (30, 32, 34, 36) d'un gaz à pression variable auxdits orifices de distribution (28) en un emplacement situé radialement à l'extérieur dudit entonnoir pour faire varier la pression du gaz dans lesdits orifices de distribution et régler ainsi le débit desdites particules de matière.

2. Appareil selon la revendication 1, dans lequel ledit moyen d'amenée d'un gaz à pression variable comprend un espace récepteur de gaz (32) voisin dudit entonnoir et relié audit orifice de distribution.

3. Appareil selon la revendication 2, dans lequel ledit moyen d'amenée d'un gaz à pression variable comprend un chambre centrale de tranquillisation de gaz (30) définie par le moyeu dudit rotor et une conduite (33) reliant ladite chambre de tranquillisation audit espace récepteur de gaz (32).

4. Appareil selon la revendication 3, dans lequel ledit moyen d'amenée d'un gaz à pression variable comprend un système régulateur de pression et de contrôle (36).

## Patentansprüche

1. Vorrichtung zum ständigen Zuführen von relativ feinkörnigem Material in einen Hochdruckbehälter (4), bestehend aus einem Rotor (2) mit einer zentralen Nabe und zahlreichen Einfüllöffnungen (16), die einen Durchgang vorsehen, durch den das körnige Material läuft, wobei sich jede der Einfüllöffnungen (16) radial nach außen von einer inneren Umfangsfläche des Rotors zur Mündung nahe einer Steueröffnung (28) an der äußeren Umfangsfläche des Rotors erstreckt, gekennzeichnet, durch eine regelbare Gasdruckeinrichtung (30, 32, 34, 36), die mit den Steueröffnungen (28) an einer Stelle radial auswärts von der Einfüllöffnung zur Veränderung des Gasdrucks innerhalb der Steueröffnungen für die Einstellung des Durchsatzes des körnigen Materials verbunden ist.

2. Vorrichtung nach Anspruch 1, dadurch gekennzeichnet, daß die regelbare Gasdruckeinrichtung einen gasaufnehmenden Raum (32) aufweist, der neben der Einfüllöffnung angeordnet und mit der Steueröffnung verbunden ist.

3. Vorrichtung nach Anspruch 2, dadurch gekennzeichnet, daß zu der regelbaren Gasdruckeinrichtung ein zentraler mit gas ausgefüllter Raum (30) gehört, der von der Nabe des Rotors und einem Leitungsweg (33) gebildet wird, der den zentralen, mit Gas ausgefüllten Raum mit dem gasaufnehmenden Raum (32) verbindet.

4. Vorrichtung nach Anspruch 3, dadurch gekennzeichnet, daß zu der regelbaren Gasdruckeinrichtung ein Druckregler und ein Steuersystem (36) gehören.

*PRIOR ART*

**Fig 2**

**Fig 3**

**Fig 4**

LEGEND:
○ 4.4 atm DELIVERY PRESSURE
△ 7.8 atm DELIVERY PRESSURE
□ 11.2 atm DELIVERY PRESSURE

$(P_2-P_3)$ CONTROL PRESSURE DIFFERENCE (ATM)

THROTTLING RATIO

2